# EUROPÄISCHE PATENTSCHRIFT

(11) **EP 3 287 054 B1**
(45) Veröffentlichungstag und Bekanntmachung des Hinweises auf die Patenterteilung: **01.05.2019**
(21) Anmeldenummer: 17186260.0
(22) Anmeldetag: 15.08.2017
(51) Int. Cl.: A47J 43/06, A47J 43/07

(54) **VERBINDUNGSVORRICHTUNG ZUM ANKUPPELN EINER AUFSATZEINRICHTUNG AN EINE KÜCHENMASCHINE**
CONNECTING DEVICE FOR COUPLING AN ATTACHMENT TO A FOOD PROCESSOR
DISPOSITIF DE LIAISON PERMETTANT LE RACCORDEMENT D'UN DISPOSITIF COMPLÉMENTAIRE À UN APPAREIL MÉNAGER

(30) Priorität: 26.08.2016 DE 102016216101
(43) Veröffentlichungstag der Anmeldung: 28.02.2018
(73) Patentinhaber: BSH Hausgeräte GmbH, 81739 München (DE)
(72) Erfinder: Brecko, Ales, 3000 Celje (SI); Strojansek, Aleksander, 3331 Nazarje (SI); Cater, Matej, 3301 Petrovce (SI)

(56) Entgegenhaltungen:
- DE-A1-102006 042 981
- DE-C- 940 142
- DE-U1-202016 104 138

## Beschreibung

### Hintergrund der Erfindung

Die vorliegende Erfindung betrifft eine Verbindungsvorrichtung zum Ankuppeln einer Aufsatzeinrichtung an eine Küchenmaschine gemäß dem Oberbegriff des Anspruchs 1.

### Stand der Technik

Aus dem Stand der Technik ist die DE 10 2006 042 981 A1 bekannt, in der eine Küchenmaschine mit einem schwenkbaren Deckel zum Abdecken einer Kupplungsstelle beschrieben ist. Die Küchenmaschine weist eine Kupplungsstelle zum Ankuppeln eines Bearbeitungsgerätes sowie einen Deckel zum Abdecken der Kupplungsstelle und eine Verbindungsvorrichtung auf, über die der Deckel mit einem Gehäuse der Küchenmaschine derart verbunden ist, dass er über eine Schwenkachse in eine offene Stellung, in der die Kupplungsstelle zum Anbringen eines Bearbeitungsgeräts freiliegt, schwenkbar ist. Die Verbindungsvorrichtung ist so angeordnet und eingerichtet, dass der Deckel außerdem gegenüber dem Gehäuse der Küchenmaschine verschiebbar ist.

Die DE 10 2006 042 979 A1 offenbart eine Küchenmaschine mit einer Kupplungsstelle zum Ankuppeln eines Bearbeitungsgerätes, sowie einem Deckel, der von einer geschlossenen Stellung, in der er die Kupplungsstelle abdeckt, in eine offene Stellung, in der die Kupplungsstelle zum Ankuppeln des Bearbeitungsgerätes freiliegt, schwenkbar an einem Gehäuse der Küchenmaschine angebracht ist, und einer Verriegelungseinrichtung, um den Deckel in der geschlossenen Stellung zu verriegeln. Die Verriegelungseinrichtung weist einen Entriegelungsknopf auf, der durch Betätigung von einer Ruhestellung in eine Freigabestellung bewegbar ist, um die Verriegelung zu lösen, sodass der Deckel in die offene Stellung geschwenkt werden kann, wobei der Entriegelungsknopf am Deckel angeordnet ist.

In dem deutschen Gebrauchsmuster DE 20 2016 104 138 U1 ist eine Küchenmaschine beschrieben. Die Küchenmaschine weist ein Grundgehäuse auf, mit dem sie auf einer Unterlage aufsteht. Darüber hinaus weist die Küchenmaschine eine Getriebeeinheit auf, die mit einer Abtriebsschnittstelle zum Einwechseln von verschiedenen, mit einer entsprechenden Antriebsschnittstelle versehenen Funktionsvorsätzen ausgestattet ist. Das Grundgehäuse weist auf seiner Oberseite eine Einschubebene für einen Funktionsvorsatz auf, wobei der Funktionsvorsatz nach seinem Einschub in die Einschubebene formschlüssig in der Einschubebene geführt ist. Am Ende des Einschubweges ragt die Getriebeeinheit vertikal vom Grundgehäuse nach oben derart ab, dass am Ende des Einschubweges des Funktionsvorsatzes dessen Antriebsschnittstelle drehmomentaufnehmend in die Abtriebsschnittstelle der Getriebeeinheit eingreift. Am Ende des Einschubweges eines Funktionsvorsatzes erfolgt eine automatische Verriegelung des Funktionsvorsatzes an dem Grundgehäuse.

Nachteilig bei diesen Systemen kann sein, dass das Anbringen einer Abdeckung oder einer Bearbeitungseinrichtung lediglich über einen einzigen Verbindungsmechanismus zum Ankuppeln verschiedener Bearbeitungsgeräte oder Abdeckungen möglich ist. Dadurch können nicht erwünschte Bearbeitungsaufsätze an die Küchenmaschine angekoppelt werden, wodurch Sicherheitsprobleme entstehen könnten. Auch zur Vereinfachung der Handhabung verschiedener Bearbeitungsgeräte oder Abdeckungen kann es wünschenswert sein, dass unterschiedliche Verbindungsmechanismen für verschiedene Bearbeitungsgeräte vorgesehen sind. Um hingegen unterschiedliche Verbindungsmechanismen für verschiedene Bearbeitungsgeräte oder Abdeckungen zu realisieren, war es bislang erforderlich, teure und komplexe Verbindungsmechanismen vorzusehen, welche jedoch aufgrund ihrer komplizierten Konstruktion aufwendig in der Herstellung, kostenintensiv zu warten und anfällig für Verschleißeffekte sind.

### Der Erfindung zugrunde liegende Aufgabe

Der vorliegenden Erfindung liegt die Aufgabe zugrunde, eine Verbindungsvorrichtung zum Ankuppeln einer Aufsatzeinrichtung an eine Küchenmaschine bereitzustellen, welche für verschiedene Arten von Aufsatzeinrichtungen unterschiedliche Verbindungsmechanismen zwischen der Aufsatzeinrichtung und der Küchenmaschine vorsieht, welche in einer einzigen Einheit und mit einem einfachen Aufbau kostengünstig hergestellt werden kann.

### Erfindungsgemäße Lösung

Zur Lösung der Aufgabe lehrt die Erfindung eine Verbindungsvorrichtung zum Ankuppeln einer Aufsatzeinrichtung an eine Küchenmaschine mit den Merkmalen des Anspruchs 1. Erfindungswesentlich ist, dass die Verbindungseinrichtung zumindest ein Eingriffselement aufweist, das in der Verbindungseinrichtung in radialer Richtung bewegbar gelagert ist, und durch zumindest ein Rückstellelement radial nach außen verschiebbar ist, und das Eingriffselement in seiner Rückstellposition gegenüber einer äußeren Kontur der Verbindungseinrichtung in radialer Richtung zumindest teilweise herausragt. Im Sinne der vorliegenden Erfindung bezeichnet "radial" eine radiale Richtung bezogen auf die Kupplungsrichtung der Verbindungsvorrichtung, das heißt, das Eingriffselement ist in eine Richtung verschiebbar, die sich radial von einer gedachten Achse, entlang derer die Aufsatzeinrichtung zum Ankuppeln an die Verbindungsvorrichtung der Küchenmaschine herangeführt wird, erstreckt. "Axial" bedeutet entlang der gedachten Ache. Die axiale Richtung verläuft vorzugsweise parallel zu der Drehsymmetrieachse der Verbindungsvorrichtung, die radialen und "tangentialen" Richtungen verlaufen lotrecht zur axialen Richtung, wobei die radialen und tangentialen Richtungen ebenfalls zueinander senkrecht verlaufen. Richtungsangaben wie "oben", "unten", "Oberseite" und "Unterseite" orientieren sich an der typischen Positionierung der jeweiligen Komponente in der Einbaulage. Die bevorzugte Küchenmaschine ist eine Standküchenmaschine.

Das bevorzugte Eingriffselement wird durch das Rückstellelement nach außen, also von der gedachten Achse weg, in die Rückstellposition vorgespannt und ist gegen die Rückstellkraft des Rückstellelements nach innen, also zur gedachten Achse hin, verschiebbar. Natürlich sind auch Ausführungen der Erfindung denkbar, in denen das Eingriffselement gerade umgekehrt durch das Rückstellelement nach innen in die Rückstellposition vorgespannt und ist gegen die Rückstellkraft des Rückstellelements nach außen verschiebbar ist. Erfindungsgemäß weist die Verbindungsvorrichtung mindestens ein Eingriffselement sowie mindestens ein Rückstellelement auf, das mit dem Eingriffselement zusammenwirkt und dieses in einer definierten Rückstellposition hält. Dabei ist es vorteilhaft, wenn das Eingriffselement in ein entsprechendes Verankerungselement, das an einer Kupplungseinheit vorgesehen sein kann, eingreift. Bevorzugt weisen das eine Eingriffselement sowie das Verankerungselement zueinander komplementäre Geometrien oder Profile auf, sodass ein formschlüssiger Eingriff des Eingriffselementes in das Verankerungselement bei einer maximalen gegenseitigen Kontaktfläche ermöglicht wird. Beispielsweise kann das Eingriffselement als ein Vorsprung, eine Nase oder als ein Haken und das Verankerungselement als eine Kerbe, Einbuchtung oder Nut ausgebildet sein. Diese Elemente lassen sich durch übliche Herstellungsverfahren als Massenprodukte kostengünstig herstellen.

Gemäß der Erfindung ist das mindestens eine Eingriffselement in radialer Richtung zur Verbindungsvorrichtung verschiebbar. Dadurch ist es möglich, das Eingriffselement durch einfaches manuelles Eindrücken und Loslassen reversibel hin und her zu bewegen. Das Eingriffselement wird bei der Verschiebung in radialer Richtung bevorzugt auf einer Führungsschiene gehalten oder durch andere Einrichtungen am Verlassen des bevorzugten linearen radialen Bewegungskanals gehindert. Der Führungskanal ist dabei vorzugsweise integral mit der Verbindungsvorrichtung ausgebildet und weist vorteilhaft ein zur Form des Eingriffselementes zumindest teilweise komplementäres Profil auf.

Weiter ist es erfindungsgemäß, wenn das mindestens eine Eingriffselement in seiner Rückstellposition zumindest teilweise über die Kontur der Verbindungsvorrichtung hinausragt. Die Kontur ist vorzugsweise eine kreiszylindrische Kontur. Zum Beispiel kann das Eingriffselement nach außen oder innen über die kreiszylindrische Kontur hinausragen. Durch diese exponierte Stellung kann das Eingriffselement leicht in ein außerhalb der Kontur vorliegendes Verankerungselement eingreifen und mit diesem eine robuste aber lösbare Verbindung bilden. Bevorzugt ist das Eingriffselement als ein Vorsprung, Nase, Dorn, Haken oder dergleichen ausgebildet, welches in eine Ausnehmung, Einbuchtung, Kerbe, Nut oder eine andere ähnliche Form, in der in das Verankerungselement vorliegt, einrastet. Das an dem Eingriffselement angeordnete Rückstellelement erlaubt eine hohe Flexibilität und Lösbarkeit der Verankerung zwischen dem Eingriffselement sowie dem Verankerungselement. Neben einer rein mechanischen Verankerung sind auch andere Verankerungsmechanismen, beispielsweise magnetischer Art, denkbar.

Erfindungsgemäß bildet eine Flächennormale mindestens einer Anlauffläche des herausragenden Teils des Eingriffselementes mit der Radialebene der Verbindungsvorrichtung einen Winkel von größer als 0° und kleiner als 90°, sodass das Eingriffselement aus seiner Rückstellposition durch eine tangential wirkende Kraftkomponente gegen die Rückstellkraft des Rückstellelementes radial verschiebbar ist, vorzugsweise radial nach innen. Diese Anlauffläche sind somit seitlich abgeschrägt oder gekrümmt ausgebildet, wodurch eine Umlenkung einer auf die so gebildeten seitliche Anlauffläche wirkenden Kraft erreicht werden kann, sodass das Eingriffselement aus seiner Rückstellposition durch eine tangential wirkende Kraftkomponente gegen die Rückstellkraft des Rückstellelementes radial bewegt, vorzugsweise nach innen gedrückt wird.

Die Verbindungsvorrichtung ist bevorzugt an der Küchenmaschine angeordnet, während die Aufsatzeinrichtung ferner eine zum Eingriff in die Verbindungseinrichtung vorgesehene Kupplungseinheit aufweisen kann. Alternativ kann die Kupplungseinheit an der Küchenmaschine vorgesehen sein, während die Verbindungsvorrichtung an der Aufsatzeinrichtung angeordnet ist. "Ankuppeln" im Sinne der vorliegenden Erfindung bedeutet ein Verbinden der Aufsatzeinrichtung an die Küchenmaschine, sodass eine funktionelle Verwendung der Aufsatzeinrichtung mit der Küchenmaschine ermöglicht wird. Das Ankuppeln der Aufsatzeinrichtung an die Küchenmaschine kann durch ein Kontaktieren der Aufsatzeinrichtung über eine Kupplungseinheit mit der Verbindungsvorrichtung der Küchenmaschine in geeigneter Ausrichtung und Position sowie einer anschließenden geeigneten Bewegung der Aufsatzeinrichtung relativ zur Verbindungsvorrichtung in einer linearen Form oder durch eine Rotation erfolgen, sodass ein Eingriff der Kupplungseinheit in die Verbindungsvorrichtung bewirkt wird.

Durch die Erfindung kann eine kostengünstige, sichere sowie robuste Verbindung mit einer einfachen Konstruktion zwischen der Aufsatzeinrichtung und der Küchenmaschine realisiert werden, wobei für unterschiedliche Systeme von Aufsatzeinrichtungen mit variierenden Funktionen verschiedene Verbindungsmechanismen zum Einsatz kommen können.

### Bevorzugte Ausgestaltungen der Erfindung

Vorteilhafte Aus- und Weiterbildungen, welche einzeln oder in Kombination miteinander eingesetzt werden können, sind Gegenstand der abhängigen Ansprüche und sind der nachfolgenden Beschreibung sowie den Figuren zu entnehmen. Die Bezugszeichen in sämtlichen Ansprüchen haben keine einschränkende Wirkung, sondern sollen lediglich deren Lesbarkeit verbessern.

Das bevorzugte Eingriffselement weist eine der Küchenmaschine, wenn die Verbindungsvorrichtung an der Küchenmaschine angebracht ist, oder der Aufsatzeinrichtung, wenn die Verbindungsvorrichtung an der Aufsatzeinrichtung angebracht ist, zugewandte Eingriffsfläche auf, an die ein korrespondierendes Element, zum Beispiel ein korrespondierender Vorsprung, des Gegenstücks, also der Aufsatzeinrichtung bzw. der Küchenmaschine, angreifen kann, um ein Lösen der Aufsatzeinrichtung von der Küchenmaschine zu verhindern, wenn das Eingriffselement sich in seiner Rückstellposition befindet.

In einer bevorzugten Ausführung der Erfindung weist die Verbindungsvorrichtung an ihrer Kontur mindestens einen sich radial ersteckenden Vorsprung, der verschieden von dem Eingriffselement ist. Zum Beispiel kann der Vorsprung nach außen oder innen über die - vorzugsweise kreiszylindrische - Kontur der Verbindungsvorrichtung hinausragen. Auch dieser Vorsprung weist vorzugsweise eine der Küchenmaschine, wenn die Verbindungsvorrichtung an der Küchenmaschine angebracht ist, oder der Aufsatzeinrichtung, wenn die Verbindungsvorrichtung an der Aufsatzeinrichtung angebracht ist, zugewandte Eingriffsfläche auf, an die ein korrespondierendes Element, zum Beispiel ein korrespondierender Vorsprung, des Gegenstücks, also der Aufsatzeinrichtung bzw. der Küchenmaschine, angreifen kann, um ein Lösen der Aufsatzeinrichtung von der Küchenmaschine zu verhindern, wenn das Eingriffselement sich in seiner Rückstellposition befindet. Besonders vorzugsweise ist das Eingriffselement so angeordnet, dass es in seiner Rückstellposition zumindest teilweise radial über den Vorsprung herausragt. In einer bevorzugten Ausführung der Erfindung weist die Verbindungsvorrichtung mindestens 2, zum Beispiel zwei, drei oder vier, Vorsprünge auf. Das Eingriffselement kann in einem oder mehreren, zum Beispiel zwei oder drei, der Vorsprünge angeordnet sein und in der Rückstellposition aus diesen herausragen.

In einer bevorzugten Ausführung der Erfindung bildet eine Flächennormale mindestens einer Anlauffläche des herausragenden Teils des Eingriffselementes mit der Radialebene der Verbindungsvorrichtung einen Winkel von größer als 0° und kleiner als 90°, sodass das Eingriffselement aus seiner Rückstellposition durch eine axial von oben wirkende Kraftkomponente gegen die Rückstellkraft des Rückstellelementes (10) radial verschiebbar ist, vorzugsweise radial nach innen. Diese Anlauffläche sind somit nach oben hin abgeschrägt oder gekrümmt ausgebildet, wodurch eine Umlenkung einer auf die so gebildeten oberen Anlauffläche wirkenden Kraft erreicht werden kann, sodass das Eingriffselement aus seiner Rückstellposition durch eine axial von oben wirkende Kraftkomponente gegen die Rückstellkraft des Rückstellelementes radial bewegt, vorzugsweise nach innen gedrückt wird.

Die Begriffe "radial", "axial" und "tangential" bedeuten im Sinn der vorliegenden Erfindung, dass sich zumindest eine Komponente des Richtungsvektors in radialer, axialer oder tangentialer Richtung erstreckt. Besonders bevorzugt weist der Richtungsvektor ausschließlich eine radiale, axiale oder tangentiale Komponente auf. Die Radialebene erstreckt sich senkrecht zur Rotationssymmetrieachse der Verbindungsvorrichtung.

Mit der Erfindung ist vorteilhafterweise erreichbar, dass das Ankuppeln der Aufsatzeinrichtung an die Küchenmaschine sowohl durch eine lineare Translationsbewegung der Aufsatzeinrichtung als auch durch eine Rotationsbewegung der Aufsatzeinrichtung relativ zur Verbindungsvorrichtung erfolgen kann. Vorteilhafterweise kann über eine Translationsbewegung der Aufsatzeinrichtung auf die Verbindungseinrichtung eine axiale Kraft auf die obere Anlauffläche des aus der Verbindungseinrichtung herausragenden Eingriffselementes ausgeübt werden. Eine Rotationsbewegung kann vorteilhafterweise eine tangentiale Kraft auf die seitliche Anlauffläche bewirken. Durch die abgeschrägten oder gekrümmten oberen und seitlichen Anlaufflächen an dem herausragenden Ende des Eingriffselementes werden die axialen und tangentialen Kraftkomponenten in eine radiale Kraftkomponente umgesetzt, welche das Eingriffselement gegen eine elastische Rückstellkraft radial in den Innenbereich der Verbindungseinrichtung schiebt.

Vorteilhaft ist die Verbindungsvorrichtung dadurch weitergebildet, dass die Aufsatzeinrichtung ein Bearbeitungsgerät zum Bearbeiten von Nahrungsmitteln oder ein Deckelelement zum Abdecken der Verbindungsvorrichtung ist. Durch das Vorsehen von jeweils unterschiedlichen Verbindungsmechanismen wird eine Verwechslung beim Anbringen eines Bearbeitungsgerätes oder eines Deckelelementes, welche verschiedenen mechanischen Belastungen standhalten müssen, vermieden und die Bediensicherheit der Küchenmaschine erhöht. Bei dem Bearbeitungsgerät kann es sich um eine Einrichtung zum Schneiden oder Vermischen von Nahrungsmitteln oder Zutaten handeln. Das Deckelelement zum Abdecken der Verbindungsvorrichtung dient ebenfalls der Erhöhung der Sicherheit des Benutzers und der Verlängerung der Lebensdauer des Küchengerätes, da eine Verunreinigung der Verbindungsvorrichtung verhindert wird, und zudem das Deckelement ästhetische Vorteile bietet.

Es ist besonders vorteilhaft, wenn die Verbindungsvorrichtung zwei Eingriffselemente aufweist, welche gegenüberliegend angeordnet sind. Dadurch können die auf die Verbindungsvorrichtung wirkenden Kräfte, die sowohl beim Ankupplungsvorgang wie auch beim späteren Gebrauch der Aufsatzeinrichtung auftreten, gleichmäßig verteilt und eine homogene mechanische Belastung der Verbindungseinrichtung erreicht werden. Die gleichmäßige symmetrische Beanspruchung kann die Lebensdauer der Verbindungseinrichtung erhöhen, da das Risiko von Materialermüdung und anderen Verschleißeffekten reduziert wird. Alternativ ist es auch möglich, mehr als zwei Eingriffselemente vorzusehen, welche bevorzugt in einer symmetrischen Anordnung vorliegen.

Bevorzugt kann das Ankuppeln des Bearbeitungsgerätes durch eine Rotation der Kupplungseinheit relativ zur Verbindungsvorrichtung erfolgen. Dies bedeutet, dass das Ankuppeln des Bearbeitungsgerätes sowohl durch eine Drehung der Kupplungseinheit bei einer feststehenden Verbindungsvorrichtung als auch durch eine Drehung der Verbindungsvorrichtung bei einem feststehenden Bearbeitungsgerät erreicht werden kann. Durch die Rotationsbewegung dieser beiden Einheiten relativ zueinander wird auf eine einfache und intuitive Weise ein sicheres Ankuppeln des Bearbeitungsgerätes an die Küchenmaschine bewirkt. Unter einer Rotation wird hierbei eine beliebige Art von Drehbewegung unterschiedlichen Ausmaßes, das heißt auch über variierende Winkelbereiche, verstanden. Zu diesem Zweck ist die Verbindungsvorrichtung vorzugsweise mit einem Gewinde oder Gewindeelementen oder eine oder mehrere Komponenten eines Bajonettverschlusses ausgestattet, wobei dieses Gewinde oder diese Gewindeelemente oder Komponente(n) eines Bajonettverschlusses durch den oder die die oben genannten radial ersteckenden Vorsprung bzw. Vorsprünge gebildet werden.

Weiterhin kann das Ankuppeln des Deckelelementes durch eine Linearbewegung des Deckelelementes in axialer Richtung relativ zur Verbindungsvorrichtung erfolgen. Auch in diesem Fall kann die Ankupplung des Deckelelementes entweder durch eine lineare Bewegung des Deckelelementes bei feststehender Verbindungsvorrichtung oder alternativ umgekehrt durch eine lineare Bewegung der Verbindungsvorrichtung bei feststehendem Deckelelement erreicht werden. Das Deckelelement kann somit auf eine unkomplizierte Weise mit der Verbindungsvorrichtung befestigt werden und kann diese abdecken, sodass keine Verunreinigungen in die Verbindungsvorrichtung eindringen können, welche einen Funktionsausfall der Verbindungsvorrichtung oder der Küchenmaschine bewirken können.

Geeigneter Weise ist das Rückstellelement als ein Federelement ausgebildet. Ein Federelement ist kostengünstig in hoher Qualität als Massenprodukt herzustellen und kann aufgrund seines einfachen Aufbaus über einen langen Zeitraum zuverlässig seine Funktion beibehalten. Das Federelement kann aus einem Metall, einer Legierung oder aus einem Kunststoff sowie aus Kombinationen dieser Materialien gefertigt sein. Besonders bevorzugt ist das Federelement eine Schrauben- Spiral- oder eine Blattfeder.

Es ist weiter zweckmäßig, wenn die Verbindungsvorrichtung einen kreisförmigen Querschnitt aufweist. Durch den kreisförmigen Querschnitt lässt sich die Aufsatzeinrichtung einfach über die Kupplungseinheit an der Verbindungsvorrichtung ansetzen und relativ zu dieser durch eine Rotationsbewegung drehen. Zudem ist ein kreisförmiger Querschnitt durch das Fehlen von kaum zugänglichen Ecken und Winkel leicht zu reinigen, und weist keine hervorstehenden Spitzen oder Kanten auf, an denen sich der Benutzer verletzen könnte. Darüber hinaus bietet die Kreisform einen ansprechenden ästhetischen Anblick. Ferner sind kreisförmige Geometrien durch die üblichen Herstellungs- und Verformungsverfahren kostengünstig in einer großen Anzahl und mit hoher Präzision zu erzeugen.

In einer bevorzugten Ausführungsform ist die Verbindungseinrichtung oberhalb einer Antriebseinheit, z. B. ein Motor, des Küchengerätes angeordnet. Auf diese Weise kann eine aus der Antriebseinheit austretende Welle den inneren Hohlraum der Verbindungseinrichtung passieren und direkt in die darüber liegende Bearbeitungseinrichtung eintreten, um eine mit der Welle verbundene Werkzeugeinheit anzutreiben. Ferner wird durch diese Anordnung eine hohe Stabilität des Küchengerätes im Betrieb gewährleistet, da sich der Schwerpunkt auch bei einer befüllten Bearbeitungseinrichtung über der massereichen Antriebseinheit befindet.

Vorteilhaft ist es, wenn das Ankuppeln der Aufsatzeinrichtung an die Küchenmaschine über einen Bajonettverschluss zwischen der Kupplungseinheit und der Verbindungsvorrichtung sowie das Ankuppeln der Aufsatzeinrichtung an die Küchenmaschine über einen Schnappverschluss zwischen der Kupplungseinheit und der Verbindungsvorrichtung erfolgen kann. Es ist dabei vorteilhaft, wenn die Verankerungselemente der Kupplungseinheit an den jeweiligen Verschlussmechanismus für die Aufsatzeinrichtung entsprechend angepasst sind. Daher ist für einen Bajonettverschluss als Verankerungselement insbesondere eine längliche Auskragung, die eine Steigung aufweist, um die Aufsatzeinrichtung auf die Verbindungseinrichtung zu pressen, von Vorteil, während für einen Schnappverschluss die Verankerungselemente als einfache Noppen ausgebildet sein können, welche sich radial nach innen erstrecken, um mit den Eingriffselementen der Verbindungseinrichtung in Eingriff zu kommen. Der Schnappverschluss eignet sich insbesondere für eine rasch herzustellende und leicht lösbare Verbindung mit einer einfachen Aufsatzeinrichtung, die keine großen Anforderungen an die Festigkeit der Verbindung stellt, wie beispielsweise ein Deckelelement. Demgegenüber ist ein Bajonettverschluss insbesondere für eine Verbindung der Küchenmaschine mit einem komplexeren und schwereren Bearbeitungsgerät geeignet, welcher auch heftigeren mechanischen Belastungen beim Einsatz des Gerätes, wie zum Beispiel Schütteln, Rühren oder Kneten, standhält. Zur Sicherung der Verbindung durch den Bajonettverschluss kann für eine der beiden ineinandergreifenden Schienen zudem ein Rastelement vorgesehen sein, um eine Fixierung einer Schiene in ihrer Endposition zu erreichen. Alternativ zu dem Bajonettverschluss ist es möglich, ein Gewinde oder einen Schraubverschluss zu verwenden.

### Kurzbeschreibung der Zeichnungen

Die Erfindung wird im Folgenden anhand schematischer Zeichnungen an einem Ausführungsbeispiel mit weiteren Einzelheiten näher erläutert.

Es zeigen:
- Figur 1:: Eine Küchenmaschine mit erfindungsgemäßer Verbindungsvorrichtung sowie ein Bearbeitungsgerät und ein Deckelelement;
- Figur 2:: Eine Explosionsansicht einer erfindungsgemäßen Verbindungsvorrichtung;
- Figur 3:: Eine Schnittansicht in radialer Richtung einer erfindungsgemäßen Verbindungsvorrichtung;
- Figur 4:: Eine Schnittansicht in axialer Richtung einer erfindungsgemäßen Verbindungsvorrichtung;
- Figur 5:: Eine Schnittansicht in axialer Richtung einer Kombination einer erfindungsgemäßen Verbindungsvorrichtung mit einer Kupplungseinheit im eingerasteten Zustand; und
- Figur 6:: Eine Schnittansicht in radialer Richtung einer Kombination einer erfindungsgemäßen Verbindungsvorrichtung mit einem Deckelelement im eingerasteten Zustand.

### Ausführliche Beschreibung eines Ausführungsbeispiels

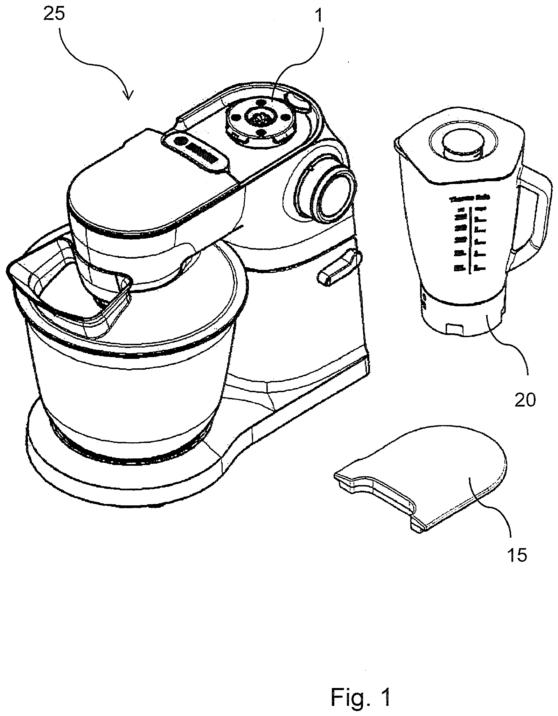

Die in Figur 1 dargestellte Küchenmaschine 25 zeigt in einem geöffneten Zustand eine Verbindungsvorrichtung 1, welche als ein Element eines Bajonettverschlusses ausgebildet ist. Im vorderen Bereich der Küchenmaschine 25 ist ein Rührbehälter zur Aufnahme von zu bearbeitenden Nahrungsmitteln oder Zutaten angeordnet. Unterhalb der Verbindungsvorrichtung 1 ist eine Antriebseinheit (nicht gezeigt) vorgesehen, welche ein Werkzeugelement (ebenfalls nicht gezeigt) antreibt, um den in dem Rührbehälter vorliegenden Inhalt zu bearbeiten. Ferner ist in Figur 1 ein Bearbeitungsgerät 20 gezeigt, welches im vorliegenden Fall als ein Behälter zur Aufnahme von Nahrungsmitteln oder Zutaten ausgebildet ist. Im unteren Bereich des Bearbeitungsgeräts 20 ist die Kupplungseinheit 23 (nicht gezeigt) vorgesehen, um mit der Verbindungsvorrichtung 1 der Küchenmaschine 25 in Eingriff zu treten und das Bearbeitungsgerät 20 mit der Küchenmaschine 25 fest zu verbinden. Durch die hergestellte Verbindung zwischen der Küchenmaschine 25 und dem Bearbeitungsgerät 20 kann die Antriebseinheit der Küchenmaschine 25 ein innerhalb des Bearbeitungsgerätes 20 angeordnetes Werkzeugelement antreiben, um Zerkleinerungs-, Knet- oder Mischvorgänge innerhalb des Bearbeitungsgerätes 20 auszuführen. Hierfür weist die Verbindungsvorrichtung 1 einen zentralen Hohlraum auf, um einer Welle (nicht gezeigt) der Antriebseinheit den Durchtritt durch die Verbindungsvorrichtung 1 und die Verbindung mit einem Werkzeugelement innerhalb des Bearbeitungsgeräts 20 zu erlauben. Ferner zeigt die Figur 1 ein Deckelelement 15, welches ebenfalls eine Kupplungseinheit 23 aufweist, und durch einfaches Aufsetzen auf die Verbindungsvorrichtung 1, das heißt durch eine axiale Verschiebung relativ zur Verbindungsvorrichtung 1, mit dieser in Eingriff tritt. Dadurch wird die Kupplungseinheit 23 des Deckelelementes 15 mit der Verbindungsvorrichtung 1 verbunden, in diesem Fall über einen Schnappverschluss, und das Deckelelement 15 deckt die Verbindungsvorrichtung 1 ab und verleiht der Küchenmaschine 25 ein optisch ansprechendes Aussehen.

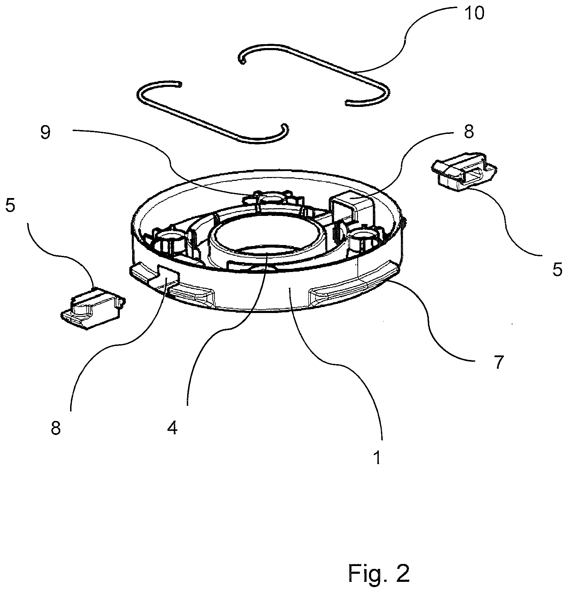

Die in Figur 2 in einer Explosionsansicht dargestellte Verbindungsvorrichtung 1 weist als Rückstellelemente 10 zwei metallische Drahtelemente auf, die sich gegenüber liegen und an vier Befestigungselementen 9, die innerhalb der Verbindungsvorrichtung 1 angeordnet sind, befestigt sind. Zudem sind zwei gegenüberliegende nasenförmige Eingriffselemente 5 gezeigt, die von zwei Führungskanälen 8 aufgenommen werden, die im Außenbereich der Verbindungsvorrichtung 1 vorgesehen sind, und eine Verschiebung sowie Führung der Eingriffselemente 5 innerhalb des Führungskanales 8 erlauben. Ferner sind im Umfangsbereich der Verbindungsvorrichtung 1 Auskragungen 7 dargestellt, welche neben den Eingriffselementen 5 ebenfalls zum Eingriff in Verankerungselemente 24 (nicht dargestellt) zur Verfügung stehen. Die Rückstellelemente 10 halten die Eingriffselemente 5 in einer definierten Rückstellposition.

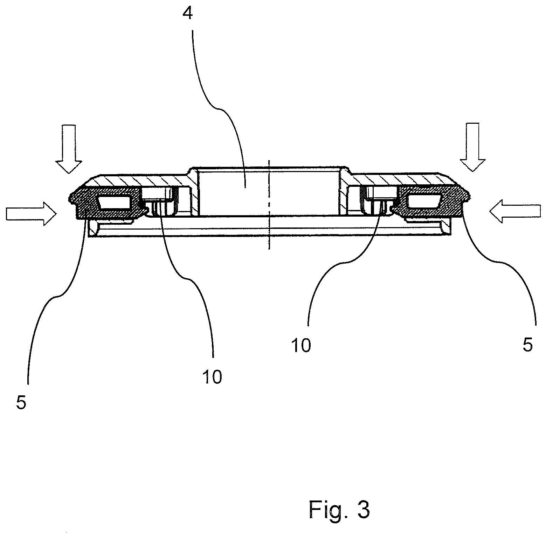

Die in Figur 3 gezeigte Querschnittsansicht in radialer Richtung der Verbindungsvorrichtung 1 zeigt die beiden gegenüberliegenden Eingriffselemente 5, welche durch die mit Pfeildarstellungen angezeigte Krafteinwirkungen in axialer oder radialer Richtung gegen die elastische Kraft der Rückstellelemente 10 reversibel nach innen und nach außen verschoben werden können. Durch diese reversible Verschiebung der Eingriffselemente 5 können die Verankerungselemente 24 mit den Eingriffselementen 5 in Eingriff treten und in diesen einrasten. Zudem ist ein zentraler Innenhohlraum 4 gezeigt, welcher den Durchtritt einer Welle einer Antriebseinheit ermöglicht.

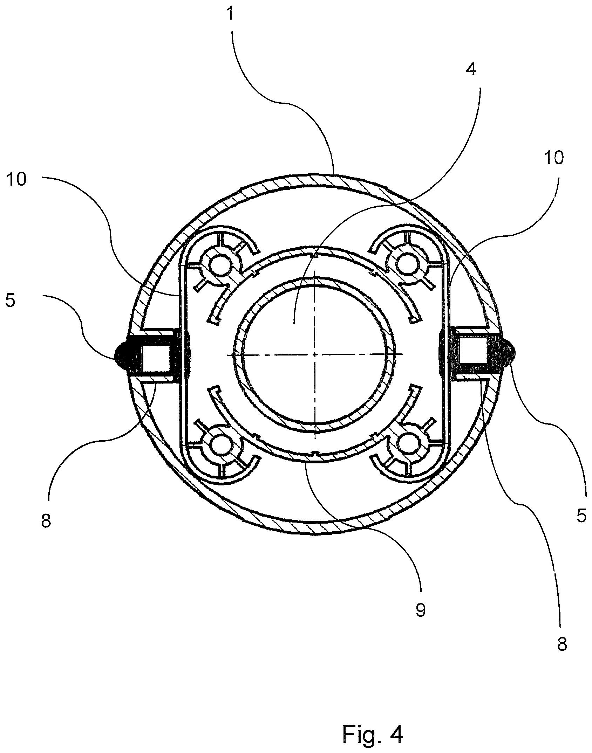

Die in Figur 4 gezeigte Schnittansicht einer erfindungsgemäßen Verbindungsvorrichtung 1 in axialer Richtung weist einen kreisförmigen Querschnitt auf, und enthält im Inneren vier Befestigungselemente 9 zum Fixieren der beiden sich gegenüberliegenden Rückstellelemente 10, die als Federelemente ausgebildet sind. Im mittleren Bereich der Rückstellelemente 10 werden die beiden Eingriffselemente 5 kontaktiert, welche in Führungskanälen 8 angeordnet sind, und drücken die Eingriffselemente 5 nach außen, sodass die jeweiligen Enden der Eingriffselemente 5 über den Umfangsbereich, d. h. die Kontur, der Verbindungsvorrichtung 1 hinausragen. Durch eine axiale oder radiale Krafteinwirkung können die Eingriffselemente 5 in radialer Richtung nach innen zum Mittelpunkt der Verbindungseinrichtung 1 gedrückt werden, sodass die vorstehenden Enden der Eingriffselemente 5 mit der Außenkontur der Verbindungsvorrichtung 1 abschließen. Ebenfalls dargestellt ist der kreisförmige Querschnitt des Innenhohlraums 4 zum Durchtritt der Welle der Antriebseinheit.

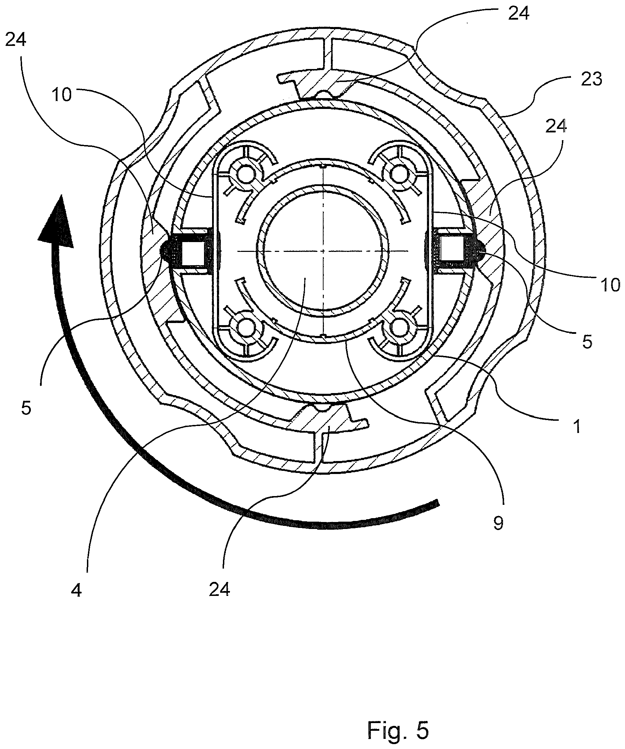

In Figur 5 ist eine erfindungsgemäße Verbindungsvorrichtung 1 mit einer Kupplungseinheit 23 in einem eingerasteten Zustand dargestellt. Das Einrasten erfolgt dabei durch eine relative Verdrehung der erfindungsgemäßen Verbindungsvorrichtung 1 zur Kupplungseinheit 23, sodass die Eingriffselemente 5 durch die an der Kupplungseinheit 23 im Innenbereich angeordneten Verankerungselemente 24 durch die mechanische Einwirkung zunächst gegen den Widerstand der Rückstellelemente 10 radial nach innen gedrückt sowie anschließend in die Kerbe der Verankerungselemente 24 durch die Federkraft der Rückstellelemente wieder nach außen gedrückt werden, wodurch das Einrasten erfolgt. Zum Lösen der Verbindung zwischen der Verbindungsvorrichtung 1 und der Kupplungseinheit 23 genügt eine Verdrehung der beiden Einheiten 1, 23 in der entgegengesetzten Richtung. Auch hierbei wird zunächst das Eingriffselement 5 nach innen gedrückt, gleitet dann über die äußere Kontur der Verankerungselemente 24, um anschließend in den gebildeten Freiraum wieder nach außen zu treten. In dem hier gezeigten Beispiel beträgt die Anzahl der Eingriffselemente 5 und die Anzahl der Verankerungselemente 24, es kann aber auch ein anderes ganzzahliges Verhältnis der beiden Elementarten 5, 24 zueinander gewählt werden, wodurch verschiedene Winkeleinstellungen der Verbindungsvorrichtung 1 zur Kupplungseinheit 23 möglich sind.

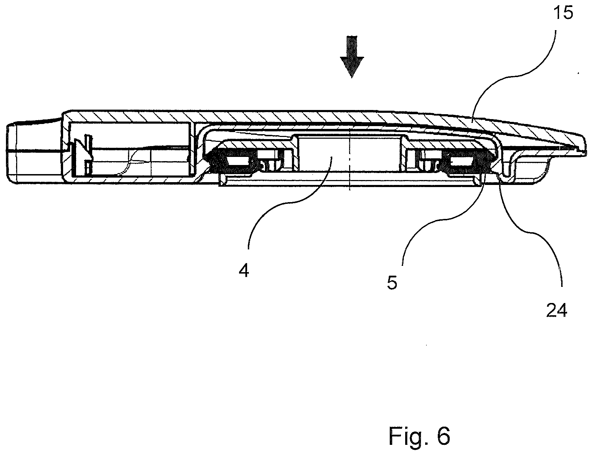

Bei der in Figur 6 dargestellten Schnittansicht der Verbindungsvorrichtung 1 mit einem Deckelelement 15 im eingerasteten Zustand erfolgt das Befestigen des Deckelelementes 15 mit der Verbindungsvorrichtung 1 durch eine einfache axiale Verschiebung relativ zueinander in dargestellter Pfeilrichtung. Die in Nasenform ausgebildeten Verankerungselemente 24 drücken im Verlauf dieser axialen Verschiebung die Nasen der Eingriffselemente 5 gegen den Widerstand der Rückstellelemente 10 radial nach innen zum Zentrum der Verbindungsvorrichtung 1. Bei der weiteren axialen Verschiebung können nun die beiden Nasenkonturen ineinandergreifen, wobei die Eingriffselemente 5 durch die Rückstellelemente 10 wieder nach außen gedrückt werden und die Eingriffspositionen der Verankerungselemente 24 mit den Eingriffselementen 5 fixieren. Dadurch wird das Deckelelement 15 auf der Verbindungsvorrichtung 1 befestigt und deckt den offenen Innenhohlraum 4 ab, sodass keine Verunreinigungen in die Küchenmaschine 25 eintreten können und gleichzeitig ein ästhetischer Effekt bewirkt wird.

### Bezugszeichenliste

- 1: Verbindungsvorrichtung
- 4: Innenhohlraum
- 5: Eingriffselement
- 7: Auskragung
- 8: Führungskanal
- 9: Befestigungselement
- 10: Rückstellelement
- 15: Deckelelement
- 20: Bearbeitungsgerät
- 23: Kupplungseinheit
- 24: Verankerungselement
- 25: Küchenmaschine

## Patentansprüche

1. Verbindungsvorrichtung (1), die an einer Küchenmaschine (25) oder einer Aufsatzeinrichtung (15, 20) angeordnet und zum Ankuppeln einer Aufsatzeinrichtung (15, 20) an die Küchenmaschine (25) vorgesehen ist, wobei die Verbindungsvorrichtung (1) zumindest ein Eingriffselement (5), das in der Verbindungseinrichtung (1) in radialer Richtung bewegbar gelagert ist, und durch zumindest ein Rückstellelement (10) radial verschiebbar ist, aufweist, wobei das Eingriffselement (5) in seiner Rückstellposition gegenüber einer Kontur der Verbindungseinrichtung (1) radial zumindest teilweise herausragt,
**dadurch gekennzeichnet, dass**
eine Flächennormale mindestens einer Anlauffläche des herausragenden Teils des Eingriffselementes (5) mit der Radialebene der Verbindungsvorrichtung (1) einen Winkel von größer als 0° und kleiner als 90° bildet, sodass das Eingriffselement (5) aus seiner Rückstellposition durch eine tangential wirkende Kraftkomponente gegen die Rückstellkraft des Rückstellelementes (10) radial verschiebbar ist.

2. Verbindungsvorrichtung (1), nach Anspruch 1, **dadurch gekennzeichnet, dass** die Verbindungsvorrichtung (1) an ihrer Kontur mindestens einen sich radial ersteckenden Vorsprung aufweist.

3. Verbindungsvorrichtung (1), nach Anspruch 1 oder 2, **dadurch gekennzeichnet, dass** eine Flächennormale mindestens einer Anlauffläche des herausragenden Teils des Eingriffselementes (5) mit der Radialebene der Verbindungsvorrichtung (1) einen Winkel von größer als 0° und kleiner als 90° bildet, sodass das Eingriffselement (5) aus seiner Rückstellposition durch eine axial von oben wirkende Kraftkomponente gegen die Rückstellkraft des Rückstellelementes (10) radial verschiebbar ist.

4. Verbindungsvorrichtung (1) nach einem der vorherigen Ansprüche, **dadurch gekennzeichnet, dass** die Aufsatzeinrichtung (15, 20) ein Bearbeitungsgerät (20) zum Bearbeiten von Nahrungsmitteln oder ein Deckelelement (15) zum Abdecken der Verbindungsvorrichtung (1) ist.

5. Verbindungsvorrichtung (1) nach einem der vorherigen Ansprüche, **dadurch gekennzeichnet, dass** die Verbindungsvorrichtung (1) zwei gegenüberliegende Eingriffselemente (5) aufweist.

6. Verbindungsvorrichtung (1) nach einem der vorherigen Ansprüche, **dadurch gekennzeichnet, dass** das zumindest eine Eingriffselement (5) zum Eingriff in ein Verankerungselement (24) einer Kupplungseinheit (23) ausgebildet ist.

7. Verbindungsvorrichtung (1) nach einem der vorherigen Ansprüche, **dadurch gekennzeichnet, dass** das Rückstellelement (10) als ein Federelement ausgebildet ist.

8. Verbindungsvorrichtung (1) nach einem der vorherigen Ansprüche, **dadurch gekennzeichnet, dass** die Verbindungsvorrichtung (1) einen kreisförmigen Querschnitt aufweist.

9. Verbindungsvorrichtung (1) nach einem der vorherigen Ansprüche, **dadurch gekennzeichnet, dass** die Verbindungsvorrichtung (1) über einer Antriebseinheit des Küchengerätes angeordnet ist.

10. Verbindungsvorrichtung (1) nach einem der vorherigen Ansprüche, **dadurch gekennzeichnet, dass** die Verbindungsvorrichtung (1) zumindest einen Führungskanal (8) zur Aufnahme des zumindest einen Eingriffselementes (5) aufweist, in dem das Eingriffselement (5) radial verschiebbar gelagert ist.

11. Verbindungsvorrichtung (1) nach einem der Ansprüche 2 bis 7, **dadurch gekennzeichnet, dass** die Verbindungsvorrichtung (1) ein Ankuppeln des Bearbeitungsgerätes (20) an die Küchenmaschine (25) über einen Bajonettverschluss zwischen der Kupplungseinheit (23) und der Verbindungsvorrichtung (1) sowie ein Ankuppeln des Deckelementes (15) über einen Schnappverschluss zwischen der Kupplungseinheit (23) und der Verbindungsvorrichtung (1) erlaubt.

## Claims

1. Connecting device (1) which is arranged on a food processor (25) or an attachment (15, 20) and is provided for coupling an attachment (15, 20) to the food processor (25), wherein the connecting device (1) has at least one engaging element (5), which is movably supported in the radial direction in the connecting device (1), and can be displaced radially by means of at least one reset element (10), wherein in its reset position the engaging element (5) projects radially at least partially with respect to a contour of the connecting device (1), **characterised in that**
a surface normal of at least one stop face of the projecting part of the engaging element (5) with the radial plane of the connecting device (1) forms an angle of greater than 0° and less than 90°, so that the engaging element (5) can be displaced radially out of its reset position by means of a tangentially acting force component against the reset force of the reset element (10).

2. Connecting device (1) according to claim 1, **characterised in that** the connecting device (1) has at least one radially extending projection on its contour.

3. Connecting device (1) according to claim 1 or 2, **characterised in that** a surface normal of at least one stop face of the projecting part of the engaging element (5) with the radial plane of the connecting device (1) forms an angle of greater than 0° and less than 90°, so that the engaging element (5) can be displaced radially out of its reset position by means of a force component acting axially from above against the reset force of the reset element (10).

4. Connecting device (1) according to one of the preceding claims, **characterised in that** the attachment (15, 20) is a processing device (20) for processing food or a cover element (15) for covering the connecting device (1).

5. Connecting device (1) according to one of the preceding claims, **characterised in that** the connecting device (1) has two opposing engaging elements (5).

6. Connecting device (1) according to one of the preceding claims, **characterised in that** the at least one engaging element (5) is embodied for engagement in an anchoring element (24) of a coupling unit (23).

7. Connecting device (1) according to one of the preceding claims, **characterised in that** the reset element (10) is embodied as a spring element.

8. Connecting device (1) according to one of the preceding claims, **characterised in that** the connecting device (1) has a circular cross-section.

9. Connecting device (1) according to one of the preceding claims, **characterised in that** the connecting device (1) is arranged above a drive unit of the food processor.

10. Connecting device (1) according to one of the preceding claims, **characterised in that** the connecting device (1) has at least one guide duct (8) for receiving the at least one engaging element (5), in which the engaging element (5) is supported in a radially displaceable manner.

11. Connecting device (1) according to one of claims 2 to 7, **characterised in that** the connecting device (1) allows the processing device (20) to be coupled to the food processor (25) by way of a bayonet coupling between the coupling unit (23) and the connecting device (1) as well as the cover element (15) to be coupled by way of a snap fit between the coupling unit (23) and the connecting device (1).

## Revendications

1. Dispositif de raccordement (1) qui est agencé sur un robot culinaire (25) ou un dispositif d'accessoire (15, 20) et est prévu pour accoupler un dispositif d'accessoire (15, 20) au robot culinaire (25), dans lequel le dispositif de raccordement (1) comprend au moins un élément de mise en prise (5), qui est monté mobile en direction radiale dans le dispositif de raccordement (1) et peut être déplacé radialement par au moins un élément de rappel (10), dans lequel l'élément de mise en prise (5) fait saillie radialement au moins en partie dans sa position de rappel par rapport à un contour du dispositif de raccordement (1),
**caractérisé en ce qu'**une normale à la surface d'au moins une surface de butée de la partie saillante de l'élément de mise en prise (5) forme un angle supérieur à 0° et inférieur à 90° avec le plan radial du dispositif de raccordement (1), de telle manière que l'élément de mise en prise (5) peut être déplacé radialement depuis sa position de rappel par une composante de force agissant tangentiellement contre la force de rappel de l'élément de rappel (10).

2. Dispositif de raccordement (1) selon la revendication 1, **caractérisé en ce que** le dispositif de raccordement (1) comporte sur son contour au moins une partie saillante s'étendant radialement.

3. Dispositif de raccordement (1) selon la revendication 1 ou 2, **caractérisé en ce qu'**une normale à la surface d'au moins une surface de butée de la partie saillante de l'élément de mise en prise (5) forme un angle supérieur à 0° et inférieur à 90° avec le plan radial du dispositif de raccordement (1), de telle manière que l'élément de mise en prise (5) peut être déplacé radialement depuis sa position de rappel par une composante de force agissant axialement de haut en bas contre la force de rappel de l'élément de rappel (10).

4. Dispositif de raccordement (1) selon l'une des revendications précédentes, **caractérisé en ce que** le dispositif d'accessoire (15, 20) est un appareil de traitement (20) destiné à traiter des denrées alimentaires ou un élément de couvercle (15) destiné à couvrir le dispositif de raccordement (1).

5. Dispositif de raccordement (1) selon l'une des revendications précédentes, **caractérisé en ce que** le dispositif de raccordement (1) comprend deux éléments de mise en prise (5) opposés.

6. Dispositif de raccordement (1) selon l'une des revendications précédentes, **caractérisé en ce que** le au moins un élément de mise en prise (5) est configuré pour mettre en prise une unité d'accouplement (23) dans un élément d'ancrage (24).

7. Dispositif de raccordement (1) selon l'une des revendications précédentes, **caractérisé en ce que** l'élément de rappel (10) est configuré sous forme d'un élément à ressort.

8. Dispositif de raccordement (1) selon l'une des revendications précédentes, **caractérisé en ce que** le dispositif de raccordement (1) a une section transversale circulaire.

9. Dispositif de raccordement (1) selon l'une des revendications précédentes, **caractérisé en ce que** le dispositif de raccordement (1) est agencé sur une unité d'entraînement de l'appareil culinaire.

10. Dispositif de raccordement (1) selon l'une des revendications précédentes, **caractérisé en ce que** le dispositif de raccordement (1) comprend au moins un canal de guidage (8) destiné à recevoir au moins un élément de mise en prise (5), dans lequel l'élément de mise en prise (5) est monté de façon à pouvoir être déplacé radialement.

11. Dispositif de raccordement (1) selon l'une des revendications 2 à 7, **caractérisé en ce que** le dispositif de raccordement (20) permet un accouplement de l'appareil de traitement (20) au robot culinaire (25) par l'intermédiaire d'une fermeture à baïonnette entre l'unité d'accouplement (23) et le dispositif de raccordement (1) ainsi qu'un accouplement de l'élément de couvercle (15) par l'intermédiaire d'une fermeture à encliquetage entre l'unité d'accouplement (23) et le dispositif de raccordement (1).
